# EUROPÄISCHE PATENTSCHRIFT

(11) **EP 1 803 966 B1**
(45) Veröffentlichungstag und Bekanntmachung des Hinweises auf die Patenterteilung: **24.04.2013**
(21) Anmeldenummer: 06026980.0
(22) Anmeldetag: 28.12.2006
(51) Int. Cl.: F16F 15/023, F16C 29/02, B23Q 1/38

(54) **Luftlager mit reduziertem Rauschen**
Reduced-noise air bearing
Palier pneumatique avec réduction du bruit

(30) Priorität: 30.12.2005 EP 05028714
(43) Veröffentlichungstag der Anmeldung: 04.07.2007
(73) Patentinhaber: Integrated Dynamics Engineering GmbH, 65479 Raunheim (DE)
(72) Erfinder: Heiland, Peter, 65479 Raunheim (DE)
(74) Vertreter: Blumbach Zinngrebe

(56) Entgegenhaltungen:
- EP-B1- 0 927 380
- WO-A-92/22272

## Beschreibung

### Gebiet der Erfindung

Die Erfindung bezieht sich auf ein Federsystem zur Schwingungsisolation, insbesondere auf ein vertikal und horizontal wirksames Luftlager mit reduziertem Fauschen.

### Hintergrund der Erfindung

Vertikal und horizontal wirksame Luftlager sind bekannt. So wird ein derartiges horizontal und vertikal wirksames Luftlager in der europäischen Patentschrift EP 927 380 (Erfinder: Erik Loostra und Peter Heiland).

Ein derartiges bekanntes Luftlager weist einen Kolben auf, der die zu lagernde Last trägt und in erster Linie zur vertikalen Lagerung vorgesehen ist. Zwischen dem Kolben und der Basisplatte ist ein Zwischenteil vorgesehen, welches Kolben und Basisteil voneinander trennt, so dass horizontale und vertikale Lagerung im wesentlichen voneinander entkoppelt werden.

So ist es möglich, Luftlager zur gleichzeitig vertikalen und horizontalen Lagerung bereitzustellen, bei denen das Rauschen, welches insbesondere durch die im Lager vorhandenen Luftströmungen erzeugt wird, erheblich reduziert ist.

Nachteilig an diesem bekannten Luftlager hat sich gezeigt, dass das zwischenteil, welches typischerweise rotationssymmetrisch ausgebildet ist, in Drehbewegung kommen kann, wodurch es, vermutlich aufgrund vor Strömungsänderungen, zu einem verstärkten Kraftrauschen des Lagers kommt.

### Aufgabe der Erfindung

Der Erfindung liegt demgegenüber die Aufgabe zugrunde, ein gattungsgemäßes Luftlager bereitzustellen, welches sich durch ein reduziertes Kraftrauschen auszeichnet.

Insbesondere ist Aufgabe der Erfindung, ein sich Verdrehen oder Schwingen des Zwischenteils zu verringern oder zu vermeiden.

### Zusammenfassung der Erfindung

Die Aufgabe der Erfindung wird bereits durch ein Federsystem zur Schwingungsisolation nach Anspruch 1 erreicht.

Bevorzugte Ausführungsformen und Weiterbildungen der Erfindung sind den jeweiligen Unteransprüchen zu entnehmen.

Gemäß der Erfindung ist ein Federsystem zur Schwingungsisolation vorgesehen, insbesondere ein vertikal und horizontal wirksames Luftlager, welches ein Basisteil und einen Kolben umfasst, der zum Tragen einer isolierenden Last im Betriebszustand zumindest vertikal beweglich gegenüber dem Basisteil angeordnet ist.

Gattungsgemäß ist zum Entkoppeln von vertikaler und horizontaler Lagerung zwischen dem Basisteil und dem Kolben ein Zwischenteil angeordnet, welches im Betriebszustand, dass heisst bei eingeschalteter Luftzufuhr, sowohl gegen den Kolben als auch gegen das Basisteil durch entstehende Fluidspalte beabstandet ist.

Gemäß der Erfindung sind magnetische Mittel, insbesondere zumindest einen Magneten umfassende magnetische Mittel, vorgesehen, welche im Betriebszustand das Zwischenteil im wesentlichen gegen eine Verdrehung sichern.

Die Erfinder haben herausgefunden, dass bereits durch das Bereitstellen einer geringen magnetischen Anziehungskraft eine Vorzugsrichtung des Zwischenteils erreicht werden kann, so dass dieses gegen Drehbewegungen gesichert ist und auch periodische Schwingungen, insbesondere Drehschwingungen, des Zwischenteils weitgehend vermieden werden.

Bei einer bevorzugten Ausführungsform der Erfindung umfassen die magnetischen Mittel zumindest einem Permanentmagneten. Dies hat den Vorteil, dass keine Stromzufuhr erforderlich ist.

Eine alternative Ausführungsform umfasst zumindest einen Elektromagneten. Ein derartiger Elektromagnet hat gegenüber einem Permanentmagneten den Vorteil, dass über den Elektromagneten die magnetische Kraft gesteuert oder geregelt werden kann, so dass die Magnetkraft den jeweiligen Anforderungen, insbesondere der Luftzufuhr des Luftlagers, über die die Tragkraft eingestellt werden kann, angepasst werden kann.

Vorzugsweise sind die magnetischen Mittel zwischen dem Zwischenteil und der isolierenden Last angeordnet. So können die magnetischen Mittel sich direkt an der Last, insbesondere einem zu isolierenden Tisch, befinden oder an dem Kolben, der den Tisch trägt.

Alternativ können gemäß der Erfindung die magnetischen Mittel auch zwischen Basisteil und Zwischenteil vorgesehen sein.

Vorzugsweise ist an dem Kolben oder an der zu isolierenden Last zumindest ein Magnet angeordnet, während das Zwischenteil zumindest einen ferromagnetischen Abschnitt aufweist.

Ein ferromagnetischer Abschnitt am Zwischenteil ist leicht einzulassen. Insbesondere können derartige ferromagnetische Materialien, insbesondere Stahl, leicht bearbeitet und der Form des Zwischenteils angepasst werden.

Alternativ ist am Zwischenteil ein Permanentmagnet angeordnet, der einen Gegenpol zu vorstehend beschriebenem Magneten bildet.

An der isolierenden Last oder am Kolben sind die Geometrie und die Gewichtsverteilung weit weniger wichtig, so dass hier leicht ein Permanentmagnet angebracht werden kann.

Vorzugsweise liegen sich ferromagnetischer Abschnitt und Magnet im Betriebszustand gegenüber. Insbesondere ist vorgesehen, die magnetischen Mittel möglichst went außen von einer Rotationsachse des Zwischenteils zu beabstanden. So wird bereits bei geringer Magnetkraft eine hohe Wirkung erzielt.

Das Zwischenteil ist vorzugsweise rotationssymme=risch ausgebildet. Unter "rotationssymmetrisch" wird i:n Sinne der Anmeldung verstanden, dass die Gehäuseform des insbesondere becherförmig ausgebildeten Zwischenteils eine Rotationssymmetrie aufweist. Es ist dadurch aber nicht ausgeschlossen, dass dieser rotationssymmetrische Körper mit Bohrungen und Spalten zur Luftführung versehen ist, die im engeren Sinne dazu führen, dass der Körper In Detail von einer rotationssymmetrischen Form abweicht.

Zur Lagerung des Zwischenteils umfasst das Basisteil vorzugsweise eine im wesentlichen kolbenförmige Aussparung, in welcher das Zwischenteil im Betriebszustand zumindest horizontal beweglich angeordnet ist. Es bilden sich also Luftspalte zwischen der kolbenförmigen Aussparung und dem Zwischenteil, innerhalb der sich das Zwischenteil bewegen kann und im wesentlichen eine horizontale Dämpfung erreicht wird.

Das Basisteil umfasst im übrigen in bevorzugter Weise zumindest eine Fluidführung, über die das Fluid, insbesondere die Luft, zum Kolben und zum Zwischenteil geführt wird.

Der Kolben ist vorzugsweise im wesentlichen als Vertikallager ausgebildet und verfügt über einen Arbeitsraum, durch den bei Druckluftzufuhr eine Kraft in vertikaler Richtung erzeugt wird.

Gemäß der Erfindung ist es möglich, Federsysteme bereitzustellen, die eine Tragkraft von über 1000 Newton, bevorzugt von über 5000 Newton und besonders bevorzugt sogar von über 10.000 Newton haben.

Bereits bei einer Anregungsfrequenz von 5 Hz kann eine Dämpfung von mehr als 3 dB, bevorzugt mehr als 5 dB und besonders bevorzugt mehr als 10 dB erreicht werden.

Bei einer Anregungsfrequenz von 15 Hz beträgt die Dämpfung bereits mehr als 10 dB, bevorzugt mehr als 20 dB und besonders bevorzugt mehr als 25 dB.

Das Zwischenteil ist vorzugsweise so ausgestaltet, dass es eine Unwucht von weniger als 15 g, bevorzugt vor. weniger als 8 g und besonders bevorzugt von weniger als 3 g, jeweils bezogen auf die Außenkante des Zwischenteils, aufweist.

Die Unwucht im Sinne der Anmeldung ist dahingehend definiert, dass die Gewichtskraft in Gramm gemessen wird, die das an der Rotationsachse fest gelagerte Zwischenteil an seiner äußersten Kante ausübt.

Die Unwucht wird insbesondere dadurch reduziert, dass entweder der ferromagnetische Abschnitt oder der Magnet, der am Zwischenteil angeordnet ist, in das zwischenteil eingelassen wird.

Alternativ ist auch denkbar, das Zwischenteil durch Abnehmen von Material auf der gegenüber liegenden Seite des Magneten oder des ferromagnetischen Abschnitts auszuwuchten.

Alternativ können auch zumindest zwei magnetische Mittel, insbesondere Magnete oder ferromagnetische Abschnitte rotationssymmetrisch am Zwischenteil angeordnet werden. Dies hat zudem den Vorteil, dass beidseitig eine magnetische Kraft ausgeübt wird. So kann die Erzeugung eines Drehmoments durch die Magnetkraft verhindert werden.

Bei einer Weiterbildung der Erfindung umfasst das Zwischenteil zumindest einen Magneten oder ferromagnetischen Abschnitt, der im Betriebszustand im wesentlichen gegenüber einen elektrisch oder elektromagnetisch betriebenen Aktuator angeordnet ist. So kann der Permanentmagnet eines ohnehin vorhandenen Aktuators als Gegenpol benutzt werden.

Das Zwischenteil selbst besteht im wesentlichen vorzugsweise aus Aluminium oder einer Aluminiumlegierung.

### Kurzbeschreibung der Zeichnungen

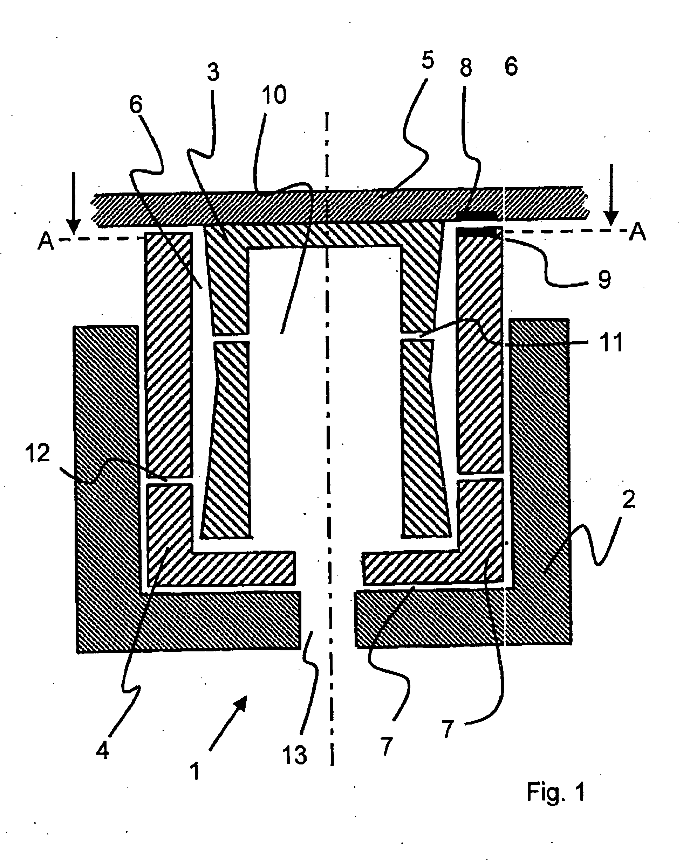

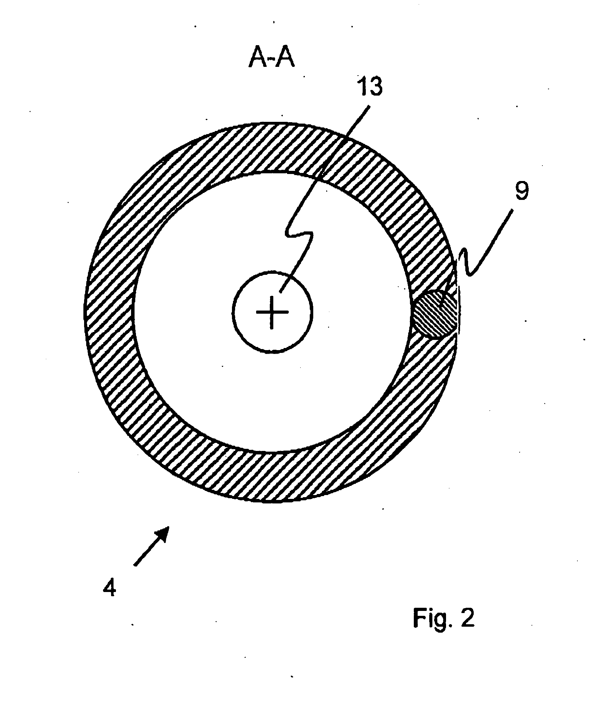

Die Erfindung soll im Folgenden anhand der Zeichnungen Fig. 1 und Fig. 2 näher erläutert werden.
- Fig. 1: zeigt schematisch einen Querschnitt eines Ausführungsbeispiels eines erfindungsge:näßen Luftlagers,
- Fig. 2: zeigt schematisch eine Schnittansicht entlang der Schnittlinie A-A aus Fig. 1.

### Detaillierte Beschreibung der Zeichnungen

Fig. 1 zeigt schematisch das Funktionsprinzip eines erfindungsgemäßen Luftlagers 1. Das Luftlager umfasst eine Basisplatte 2 und einen Kolben 3, der eine Last 5 trägt. Bei der Last 5 handelt es sich typischerweise um einen Tisch, auf dem gegen Schwingungen zu isolierende Baugruppen (nicht dargestellt) angeordnet sind. Zwischen dem Basisteil 2 und dem Kolben 3 ist ein Zwischenteil 4 angeordnet. Das Basisteil 2 ist zur Aufnahme des Zwischenteils 4 im wesentlichen kreiszylinderförmig ausgebildet. Im Betrieb wird über eine Fluiddurchführung 13 Druckluft in das Luftlager gepumpt. Die Druckluft strömt in den Arbeitsraum 10 des Kolbens 3 und bildet somit ein vertikales Luftlager aus. Der Kolben 3 verfügt über Bohrungen 11, über die seitlich Luft in den Zwischenraum zwischen Kolben 3 und Zwischenteil 4 strömt, so dass sich zwischen Kolben 3 und Zwischenteil 4 Luftspalte 6 ausbilden.

Auch das Zwischenteil 4 verfügt über Bohrungen 12, durch die Luft zwischen das Zwischenteil 4 und das Basisteil 2 strömen kann. Daher bilden sich auch zwischen Basisteil 2 und Zwischenteil 4 Fluidspalte 7 aus. So wirkt der Kolben 3 im Wesentlichen als vertikales Luftlager, während das im Basisteil gelagerte Zwischenteil 4 im Wesentlichen als horizontales Luftlager wirkt. Durch das Zwischenteil 4 sind vertikale und horizontale Lagerung im Wesentlichen voneinander entkoppelt.

Da sich um das Zwischenteil 4 rundherum Luftspalte 6, 7 bilden, ist das Zwischenteil 4 frei beweglich.

Erfindungsgemäß ist in der Last 5, die als Tisch ausgebildet ist, ein Permanentmagnet 8 angeordnet. In dem aus ansonsten aus Aluminium bestehenden Zwischenteil 4 ist im Wesentlichen randseitig und dem Magneten 8 gegenüber liegend ein ferromagnetischer Abschnitt 9 eingelassen. Im Betriebszustand richtet sich daher das Zwischenteil 4 mit seinem ferromagnetischen Abschnitt 9 so aus, dass der ferromagnetische Abschnitt 9 dem Magneten 8 gegenüber liegt.

Alternativ kann im Zwischenteil auch ein Permanentmagnet eingelassen sein, der den Gegenpol zum Magneten 8 bildet. (Diese Ausführungsform ist nicht dargestellt.)

Fig. 2 zeigt schematisch eine Schnittansicht entlang der Linie A-A aus Fig. 1. Zu erkennen ist das Zwischenteil 4, welches becherförmig ausgestaltet ist und randseitig oben im Mantel einen ferromagnetischen Abschnitt 9 aufweist. Der ferromagnetische Abschnitt 9 ist in etwa kreisförmig ausgebildet und hat im wesentlichen dieselbe Erstreckung wie der Magnet (8 aus Fig. 1). Zu erkennen ist noch, dass das Zwischenteil 4 eine Aussparung als Fluiddurchführung 13 aufweist.

### Bezugszeichenliste

- 1: Luftlager
- 2: Basisteil
- 3: Kolben
- 4: Zwischenteil
- 5: Last
- 6: Fluidspalt
- 7: Fluidspalt
- 8: Magnet
- 9: ferromagnetischer Abschnitt
- 10: Arbeitsraum
- 11: Bohrung
- 12: Bohrung
- 13: Fluiddurchführung

## Patentansprüche

1. Federsystem zur Schwingungsisolation, insbesondere vertikal und horizontal wirksames Luftlager (1), umfassend ein Basisteil (2),
einen Kolben (3), der im Betriebszustand zumindest vertikal beweglich gegenüber dem Basisteil zum Tragen einer zu isolierenden Last (5) angeordnet ist,
wobei zwischen Basisteil (2) und Kolben (3) ein Zwischenteil (4) angeordnet ist, welches im Betriebszustand sowohl gegen den Kolben (3) als auch gegen das Basisteil (2) durch einen Fluidspalt (6, 7) beabstandet ist,
**dadurch gekennzeichnet, dass**
das Zwischenteil (4) im Betriebszustand durch magnetische Mittel, insbesondere durch zumindest einen Magneten (8), gegen Verdrehung gesichert ist.

2. Federsystem zur Schwingungsisolation nach Anspruch 1, **dadurch gekennzeichnet, dass** die magnetischen Mittel zumindest einen Permanentmagneten umfassen.

3. Federsystem zur Schwingungsisolation nach Anspruch 1, **dadurch gekennzeichnet, dass** die magnetischen Mittel zumindest einen Elektromagneten umfassen.

4. Federsystem zur Schwingungsisolation nach einem der vorstehenden Ansprüche, **dadurch gekennzeichnet, dass** die magnetischen Mittel zwischen dem Zwischenteil und der zu isolierenden Last (5) angeordnet sind.

5. Federsystem zur Schwingungsisolation nach Anspruch 4, **dadurch gekennzeichnet, dass** an dem Kolben (3) und/oder an der zu isolierenden Last (5) zumindest ein Magnet (8) angeordnet ist.

6. Federsystem zur Schwingungsisolation nach Anspruch 4 oder 5, **dadurch gekennzeichnet, dass** das Zwischenteil (4) zumindest einen ferromagnetischen Abschnitt (9) aufweist.

7. Federsystem zur Schwingungsisolation nach Anspruch 6, **dadurch gekennzeichnet, dass** der ferromagnetische Abschnitt (9) im Betriebszustand einem Magneten (8) gegenüberliegt.

8. Federsystem zur Schwingungsisolation nach einem der vorstehenden Ansprüche, **dadurch gekennzeichnet, dass** das Zwischenteil (4) im Wesentlichen rotationssymmetrisch ausgebildet ist.

9. Federsystem zur Schwingungsisolation nach einem der vorstehenden Ansprüche, **dadurch gekennzeichnet, dass** das Zwischenteil (4) im Wesentlichen becherförmig ausgebildet ist.

10. Federsystem zur Schwingungsisolation nach Anspruch 9, **dadurch gekennzeichnet, dass** zumindest ein Magnet (8) und/oder ein ferromagnetischer Abschnitt (9) auf der Oberseite des Zwischenteils (4) angeordnet ist.

11. Federsystem zur Schwingungsisolation nach einem der vorstehenden Ansprüche, **dadurch gekennzeichnet, dass** das Basisteil (2) eine im Wesentlichen kolbenförmige Aussparung umfasst, in welcher das Zwischenteil (4) im Betriebszustand zumindest horizontal beweglich angeordnet ist.

12. Federsystem zur Schwingungsisolation nach einem der vorstehenden Ansprüche, **dadurch gekennzeichnet, dass** das Basisteil (2) zumindest eine Fluidzuführung aufweist, über die Fluid zum Kolben (3) und/oder zum Zwischenteil (4) führbar ist.

13. Federsystem zur Schwingungsisolation nach einem der vorstehenden Ansprüche, **dadurch gekennzeichnet, dass** der Kolben als Vertikallager ausgebildet ist.

14. Federsystem zur Schwingungsisolation nach einem der vorstehenden Ansprüche, **dadurch gekennzeichnet, dass** das Zwischenteil (4) als Horizontallager ausgebildet, ist.

15. Federsystem zur Schwingungsisolation nach einem der vorstehenden Ansprüche, **dadurch gekennzeichnet, dass** das Federsystem eine Tragkraft über 1000 N, bevorzugt über 5000 N, besonders bevorzugt über 10000 N aufweist.

16. Federsystem zur Schwingungsisolation nach einem der Ansprüche 3 bis 15, **dadurch gekennzeichnet, dass** der Elektromagnet steuer- und/oder regelbar ist.

17. Federsystem zur Schwingungsisolation nach einem der vorstehenden Ansprüche, **dadurch gekennzeichnet, dass** das Federsystem bei einer Anregungsfrequenz von 5 Hz ein Dämpfung von über 3 dB, bevorzugt von über 5 dB und besonders bevorzugt von über 10 dB aufweist.

18. Federsystem zur Schwingungsisolation nach einem der vorstehenden Ansprüche, **dadurch gekennzeichnet, dass** das Federsystem bei einer Anregungsfrequenz von 15 Hz ein Dämpfung von über 10 dB, bevorzugt von über 20 dB und besonders bevorzugt von über 25 dB aufweist.

19. Federsystem zur Schwingungsisolation nach einem der vorstehenden Ansprüche, **dadurch gekennzeichnet, dass** das Zwischenteil (4) eine Unwucht von weniger als 15 g, bevorzugt weniger aus 8 g und besonders bevorzugt weniger als 3 g, jeweils bezogen auf die Außenkante des Zwischenteils, aufweist.

20. Federsystem zur Schwingungsisolation nach einem der vorstehenden Ansprüche, **dadurch gekennzeichnet, dass** das zumindest ein Magnet (8) und/oder ein ferromagnetischer Abschnitt (9) am Zwischenteil angeordnet ist, wobei der Magnet (8) und/oder ein ferromagnetischer Abschnitt (9) derart in das Zwischenteil (4) eingelassen ist, dass die Oberfläche des Magneten (8) und/oder ferromagnetischen Abschnitts (9) bündig mit der angrenzenden Oberfläche des Zwischenteils (4) fluchtet.

21. Federsystem zur Schwingungsisolation nach einem der vorstehenden Ansprüche, **dadurch gekennzeichnet, dass** das Zwischenteil (4) zumindest einen Magneten (8) und/oder zumindest einen ferromagnetischen Abschnitt (9) umfasst, wobei der Magnet (8) und/oder ferromagnetische Abschnitt (9) im Betriebszustand gegenüber einen elektrisch oder elektromagnetisch betriebenen Aktuator angeordnet ist.

22. Federsystem zur Schwingungsisolation nach einem der vorstehende Ansprüche, **dadurch gekennzeichnet, dass** zumindest zwei magnetische Mittel, insbesondere Magnete (8) und/oder ferromagnetische Abschnitte (9) vorgesehen sind, die im wesentlichen rotationssymmetrisch am Zwischenteil (4) angeordnet sind.

## Claims

1. Spring system for vibration isolation, in particular a vertically and horizontally acting air bearing (1), including a base part (2),
a piston (3) which in the operative state is disposed so as to move at least vertically with respect to the base part in order to support a load (5) to be isolated,
wherein between the base part (2) and piston (3) an intermediate part (4) is disposed which in the operative state is spaced away from the piston (3) and also from the base part (2) by a fluid gap (6, 7),
**characterised in that** the intermediate part (4) in the operative state is secured against rotation by magnetic means in particular by at least one magnet (8).

2. Spring system for vibration isolation, as claimed in claim 1, **characterised in that** the magnetic means include at least one permanent magnet.

3. Spring system for vibration isolation, as claimed in claim 1, **characterised in that** the magnetic means include at least one electromagnet.

4. Spring system for vibration isolation, as claimed in any one of the preceding claims, **characterised in that** the magnetic means are disposed between the intermediate part and the load (5) to be isolated.

5. Spring system for vibration isolation, as claimed in claim 4, **characterised in that** at least one magnet (8) is disposed on the piston (3) and/or on the load (5) to be isolated.

6. Spring system for vibration isolation, as claimed in claim 4 or 5, **characterised in that** the intermediate part (4) has at least one ferromagnetic portion (9).

7. Spring system for vibration isolation, as claimed in claim 6, **characterised in that** in the operative state the ferromagnetic portion (9) lies opposite a magnet (8).

8. Spring system for vibration isolation, as claimed in any one of the preceding claims, **characterised in that** the intermediate part (4) is formed in an essentially rotationally symmetrical manner.

9. Spring system for vibration isolation, as claimed in any one of the preceding claims, **characterised in that** the intermediate part (4) is formed in an essentially beaker-like manner.

10. Spring system for vibration isolation, as claimed in claim 9, **characterised in that** at least one magnet (8) and/or a ferromagnetic portion (9) is disposed on the upper side of the intermediate part (4).

11. Spring system for vibration isolation, as claimed in any one of the preceding claims, **characterised in that** the base part (2) includes an essentially piston-shaped aperture in which in the operative state the intermediate part (4) is disposed so as to be moveable at least horizontally.

12. Spring system for vibration isolation, as claimed in any one of the preceding claims, **characterised in that** the base part (2) has at least one fluid supply via which fluid can be supplied to the piston (3) and/or to the intermediate part (4).

13. Spring system for vibration isolation, as claimed in any one of the preceding claims, **characterised in that** the piston is formed as a vertical bearing.

14. Spring system for vibration isolation, as claimed in any one of the preceding claims, **characterised in that** the intermediate part (4) is formed as a horizontal bearing.

15. Spring system for vibration isolation, as claimed in any one of the preceding claims, **characterised in that** the spring system has a bearing capacity over 1000 N, preferably over 5000 N, particularly preferably over 10000 N.

16. Spring system for vibration isolation, as claimed in any one of claims 3 to 15, **characterised in that** the electromagnet is controllable and/or adjustable.

17. Spring system for vibration isolation, as claimed in any one of the preceding claims, **characterised in that** at an excitation frequency of 5 Hz the spring system has a damping effect of over 3 dB, preferably of over 5 dB and particularly preferably of over 10 dB.

18. Spring system for vibration isolation, as claimed in any one of the preceding claims, **characterised in that** at an excitation frequency of 15 Hz the spring system has a damping effect of over 10 dB, preferably of over 20 dB and particularly preferably of over 25 dB.

19. Spring system for vibration isolation, as claimed in any one of the preceding claims, **characterised in that** the intermediate part (4) has an imbalance of less than 15 g, preferably less than 8g and particularly preferably less than 3 g in relation in each case to the outer edge of the intermediate part.

20. Spring system for vibration isolation, as claimed in any one of the preceding claims, **characterised in that** the at least one magnet (8) and/or a ferromagnetic portion (9) is disposed on the intermediate part, wherein the magnet (8) and/or a ferromagnetic portion (9) is let into the intermediate part (4) in such a way that the surface of the magnet (8) and/or ferromagnetic portion (9) lies flush with the adjoining surface of the intermediate part (4).

21. Spring system for vibration isolation, as claimed in any one of the preceding claims, **characterised in that** the intermediate part (4) includes at least one magnet (8) and/or at least one ferromagnetic portion (9), wherein in the operative state the magnet (8) and/or ferromagnetic portion (9) is disposed opposite an electrically or electromagnetically operated actuator.

22. Spring system for vibration isolation, as claimed in any one of the preceding claims, **characterised in that** at least two magnetic means, in particular magnets (8) and/or ferromagnetic portions (9), are provided which are disposed on the intermediate part (4) in an essentially rotationally symmetrical manner.

## Revendications

1. Système d'amortissement pour l'isolation des vibrations, en particulier palier à air (1) à action verticale et horizontale, comprenant :
une pièce de base (2),
un piston (3), lequel est, en état de service, mobile au moins verticalement par rapport à la pièce de base pour le support d'une charge (5) à isoler,
une pièce intercalaire (4) étant disposée entre la pièce de base (2) et le piston (3), laquelle est, en état de service, espacée du piston (3) ainsi que de la pièce de base (2) par un interstice à fluide (6, 7),
**caractérisé en ce que** :
la pièce intercalaire (4) est, en état de service, bloquée contre une rotation par des moyens magnétiques, en particulier par au moins un aimant (8).

2. Système d'amortissement pour l'isolation des vibrations selon la revendication 1, **caractérisé en ce que** les moyens magnétiques comprennent au moins un aimant permanent.

3. Système d'amortissement pour l'isolation des vibrations selon la revendication 1, **caractérisé en ce que** les moyens magnétiques comprennent au moins un électroaimant.

4. Système d'amortissement pour l'isolation des vibrations selon l'une des revendications précédentes, **caractérisé en ce que** les moyens magnétiques sont disposés entre la pièce intercalaire et la charge (5) à isoler.

5. Système d'amortissement pour l'isolation des vibrations selon la revendication 4, **caractérisé en ce qu'**au moins un aimant (8) est disposé sur le piston (3) et/ou sur la charge (5) à isoler.

6. Système d'amortissement pour l'isolation des vibrations selon la revendication 4 ou 5, **caractérisé en ce que** la pièce intercalaire (4) comprend au moins un segment ferromagnétique (9).

7. Système d'amortissement pour l'isolation des vibrations selon la revendication 6, **caractérisé en ce que** le segment ferromagnétique (9) est, en état de service, opposé à un aimant (8).

8. Système d'amortissement pour l'isolation des vibrations selon l'une des revendications précédentes, **caractérisé en ce que** la pièce intercalaire (4) est sensiblement réalisée avec une symétrie de rotation.

9. Système d'amortissement pour l'isolation des vibrations selon l'une des revendications précédentes, **caractérisé en ce que** la pièce intercalaire (4) est sensiblement réalisée en forme de godet.

10. Système d'amortissement pour l'isolation des vibrations selon la revendication 9, **caractérisé en ce qu'**au moins un aimant (8) et/ou un segment ferromagnétique (9) sont disposés sur la face supérieure de la pièce intercalaire (4).

11. Système d'amortissement pour l'isolation des vibrations selon l'une des revendications précédentes, **caractérisé en ce que** la pièce de base (2) comprend une cavité sensiblement en forme de piston, dans laquelle la pièce intercalaire (4) est, en état de service, mobile au moins horizontalement.

12. Système d'amortissement pour l'isolation des vibrations selon l'une des revendications précédentes, **caractérisé en ce que** la pièce de base (2) comporte au moins un guidage de fluide, au moyen duquel le fluide peut être conduit vers le piston (3) et/ou la pièce intercalaire (4).

13. Système d'amortissement pour l'isolation des vibrations selon l'une des revendications précédentes, **caractérisé en ce que** le piston est réalisé comme palier vertical.

14. Système d'amortissement pour l'isolation des vibrations selon l'une des revendications précédentes, **caractérisé en ce que** la pièce intercalaire (4) est réalisée comme palier horizontal.

15. Système d'amortissement pour l'isolation des vibrations selon l'une des revendications précédentes, ledit système d'amortissement étant **caractérisé en ce qu'**il présente une capacité de charge supérieure à 1000 N, préférentiellement supérieure à 5000 N et de manière particulièrement préférée supérieure à 10000 N.

16. Système d'amortissement pour l'isolation des vibrations selon l'une des revendications 3 à 15, **caractérisé en ce que** l'électroaimant peut être commandé et/ou réglé.

17. Système d'amortissement pour l'isolation des vibrations selon l'une des revendications précédentes, ledit système d'amortissement étant **caractérisé en ce qu'**il présente, à une fréquence d'excitation de 5 Hz, un amortissement supérieur à 3 dB, préférentiellement supérieur à 5 dB et de manière particulièrement préférée supérieur à 10 dB.

18. Système d'amortissement pour l'isolation des vibrations selon l'une des revendications précédentes, ledit système d'amortissement étant **caractérisé en ce qu'**il présente, à une fréquence d'excitation de 15 Hz, un amortissement supérieur à 10 dB, préférentiellement supérieur à 20 dB et de manière particulièrement préférée supérieur à 25 dB.

19. Système d'amortissement pour l'isolation des vibrations selon l'une des revendications précédentes, **caractérisé en ce que** la pièce intercalaire (4) présente un balourd inférieur à 15 g, préférentiellement inférieur à 8 g et de manière particulièrement préférée inférieur à 3 g, par rapport au bord extérieur de la pièce intercalaire.

20. Système d'amortissement pour l'isolation des vibrations selon l'une des revendications précédentes, **caractérisé en ce que** l'au moins un aimant (8) et/ou un segment ferromagnétique (9) sont disposés sur la pièce intercalaire, l'aimant (8) et/ou un segment ferromagnétique (9) étant encastrés dans la pièce intercalaire (4) de telle manière que la surface de l'aimant (8) et/ou du segment ferromagnétique (9) soit alignée avec la surface limitrophe de la pièce intercalaire (4).

21. Système d'amortissement pour l'isolation des vibrations selon l'une des revendications précédentes, **caractérisé en ce que** la pièce intercalaire (4) comprend au moins un aimant (8) et/ou au moins un segment ferromagnétique (9), l'aimant (8) et/ou le segment ferromagnétique (9) étant, en état de service, opposés à un actionneur à commande électrique ou électromagnétique.

22. Système d'amortissement pour l'isolation des vibrations selon l'une des revendications précédentes, **caractérisé en ce qu'**au moins deux moyens magnétiques, en particulier des aimants (8) et/ou des segments ferromagnétiques (9) sont prévus, lesquels sont sensiblement disposés avec symétrie de rotation sur la pièce intercalaire (4).
